# EUROPEAN PATENT APPLICATION

(11) **EP 4 730 600 A1**
(43) Date of publication of application: **22.04.2026**
(21) Application number: 24825171.2
(22) Date of filing: 12.06.2024
(51) Int. Cl.: H02J 7/35, H02M 3/335, H02S 10/20

(54) **ENERGY STORAGE APPARATUS, AND PHOTOVOLTAIC POWER CONVERSION SYSTEM**

(30) Priority: 19.06.2023 CN 202321568344 U
(71) Applicant: Anker Innovations Technology Co., Ltd., Changsha, Hunan 410221 (CN)
(72) Inventor: LI, Yiyong, Changsha, Hunan 410221 (CN); YANG, Wenke, Changsha, Hunan 410221 (CN); MIAO, Jinsong, Changsha, Hunan 410221 (CN)
(74) Representative: Steffens, Adrian
(86) International application number: PCT/CN2024/098615
(87) International publication number: WO 2024/260275

(57) **Abstract**

Disclosed are an energy storage device and a photovoltaic energy storage inverter system. The energy storage device is used in the photovoltaic energy storage inverter system which further includes a photovoltaic component and a photovoltaic inverter. The energy storage device includes a control module, a bidirectional buck-boost module, and an energy storage module. The bidirectional buck-boost module is connected to the control module and configured to be connected to an output end of the photovoltaic component and an input end of the photovoltaic inverter. The energy storage module is connected to the bidirectional buck-boost module. Under the control of the control module, the bidirectional buck-boost module is configured to boost or buck an output voltage of the photovoltaic component and then charge the energy storage module, or configured to boost or buck a discharge voltage of the energy storage module and then transmit the boosted or bucked discharge voltage to the photovoltaic inverter during discharge of the energy storage module. The circuit and system of the energy storage device can store excess energy of the photovoltaic component to effectively avoid energy waste of the photovoltaic component, and the energy storage device continues to supply power to a load when power generation of the photovoltaic component is insufficient. (Fig. 1)

## Description

### Field

The present disclosure relates to the technical field of photovoltaic energy storage, particularly to an energy storage device and a photovoltaic energy storage inverter system.

### Background

The photovoltaic inverter system currently on the market includes a photovoltaic component and a photovoltaic inverter. An output end of the photovoltaic component is connected to an input end of the photovoltaic inverter. An output end of the photovoltaic inverter is used to connect to a load. The photovoltaic component is used to absorb solar energy from the sun and convert the solar energy into DC and output the DC directly to the photovoltaic inverter. The photovoltaic inverter is used to convert the DC output by the photovoltaic component into AC and output the AC to the load.

However, when output power of the photovoltaic component exceeds power demand of the load, excess energy of the photovoltaic component will flow to the electrical grid, resulting in energy waste. Therefore, how to effectively utilize the excess energy of the photovoltaic component to avoid energy waste has become an urgent problem to be solved.

### Summary

Examples of the present disclosure provide an energy storage device and a photovoltaic energy storage inverter system including the same, which can solve the problem in the related art that when output power of the photovoltaic component exceeds power demand of the load, excess energy of the photovoltaic component will flow to the electrical grid, resulting in energy waste.

In a first aspect, an example of the disclosure provides an energy storage device used in a photovoltaic energy storage inverter system which further includes a photovoltaic component and a photovoltaic inverter connected to each other. The energy storage device includes a control module, a bidirectional buck-boost module, and an energy storage module. The bidirectional buck-boost module is connected to the control module and configured to be connected to an output end of the photovoltaic component and an input end of the photovoltaic inverter. The energy storage module is connected to the bidirectional buck-boost module and configured to store and deliver electric energy. Under the control of the control module, the bidirectional buck-boost module is configured to boost or buck an output voltage of the photovoltaic component and then charge the energy storage module, or configured to boost or buck a discharge voltage of the energy storage module and then transmit the boosted or bucked discharge voltage to the photovoltaic inverter during discharge of the energy storage module.

According to the energy storage device in the example of the disclosure, the control module, the bidirectional buck-boost module and the energy storage module are designed. On one hand, the control module controls the bidirectional buck-boost module to boost or buck the output voltage of the photovoltaic component and then charge the energy storage module, so as to store part of energy output by the photovoltaic component in the energy storage module and increase electricity quantity of the energy storage module so that the energy storage device can supply power to the load. On the other hand, the control module controls the bidirectional buck-boost module to boost or buck the discharge voltage of the energy storage module and then transmit the boosted or bucked discharge voltage to the photovoltaic inverter during discharge of the energy storage module, so as to deliver the excess energy, which is converted by the photovoltaic component and stored in the energy storage module, to the load, so that the load can operate normally.

In a second aspect, an example of the disclosure provides a photovoltaic energy storage inverter system that includes a photovoltaic component, a photovoltaic inverter, and the above-described energy storage device. The photovoltaic component and the energy storage device are detachably connected, and the photovoltaic inverter and the energy storage device are detachably connected.

According to the photovoltaic energy storage inverter system in the example of the disclosure, the photovoltaic component, the energy storage device, and the photovoltaic inverter are components independent of each other. The user can move and assemble the photovoltaic component, the energy storage device and the photovoltaic inverter according to the actual application environment, so as to meet the user's electricity demands in different application scenarios.

### Brief Description of the Drawings

In order to more clearly illustrate technical solutions in examples of the disclosure or in the related art, the drawings that need to be used in description of the examples or the related art are briefly introduced below, and it is apparent that the accompanying drawings described below are merely some examples of the present disclosure, and for those of ordinary skill in the art, other drawings can be obtained based on these drawings without inventive work.
- FIG. 1: is a block diagram of an energy storage device according to an example of the present disclosure;
- FIG. 2: is a block diagram of a photovoltaic energy storage inverter system according to an example of the present disclosure;
- FIG. 3: is a block diagram of a photovoltaic energy storage inverter system in the related art;
- FIG. 4: is a block diagram of a photovoltaic energy storage inverter system according to another example of the present disclosure; and
- FIG. 5: is a circuit structure diagram of a bidirectional buck-boost module of an energy storage device according to an example of the present disclosure.

### Description of reference signs:

10: energy storage device; 11: control module; 12: bidirectional buck-boost module; Q1: first switching element; Q2: second switching element; Q3: third switching element; Q4: fourth switching element; L: inductor; 13: energy storage module; 14: sampling module; 15: communication module; 20: photovoltaic component; 30: photovoltaic inverter; 40: load.

### Detailed Description

In order to understand the object, technical solutions and advantages of the present disclosure more clearly, the present disclosure will be described in further detail below with reference to the accompanying drawings and examples. It should be understood that the specific examples described herein are only used to explain the disclosure and are not used to limit the disclosure.

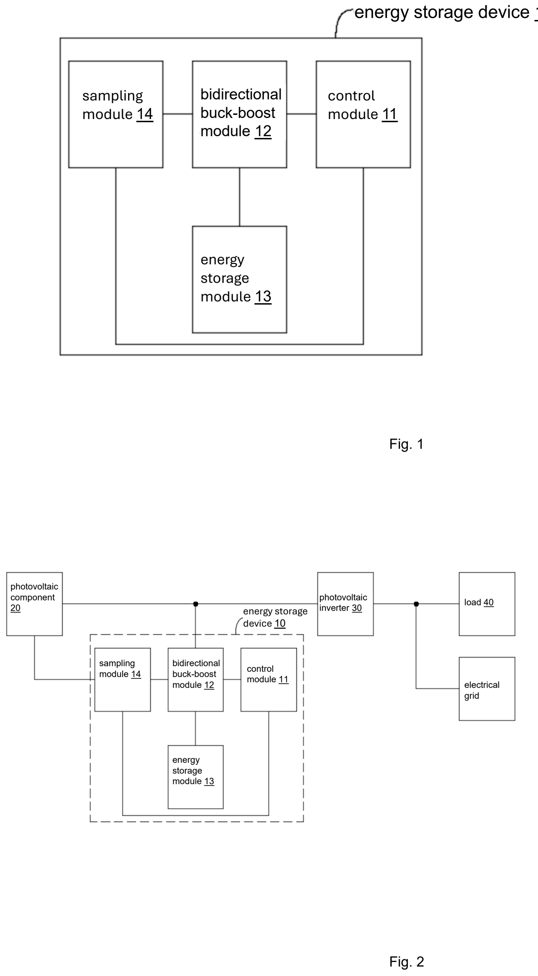

Referring to FIGS. 1 and 2, a first aspect of the present disclosure proposes an energy storage device 10 which can store excess energy of a photovoltaic component 20 to effectively avoid energy waste of the photovoltaic component 20.

The energy storage device 10 is used in a photovoltaic energy storage inverter system which further includes the photovoltaic component 20 and a photovoltaic inverter 30 connected to each other. The energy storage device 10 includes a control module 11, a bidirectional buck-boost module 12, and an energy storage module 13. The bidirectional buck-boost module 12 is connected to the control module 11 and is configured to be connected to an output end of the photovoltaic component 20 and an input end of the photovoltaic inverter 30. The energy storage module 13 is connected to the bidirectional buck-boost module 12 and is configured to store and deliver electric energy. Under the control of the control module 11, the bidirectional buck-boost module 12 is configured to boost or buck an output voltage of the photovoltaic component 20 and then charge the energy storage module 13, or configured to boost or buck a discharge voltage of the energy storage module 13 and then transmit the boosted or bucked discharge voltage to the photovoltaic inverter 30 during discharge of the energy storage module 13.

A specific circuit structure of the energy storage device 10 will be described in detail below with reference to FIGS. 1 to 5.

As illustrated in FIGS. 1 and 2, the energy storage device 10 is applied to a photovoltaic energy storage inverter system which further includes the photovoltaic component 20 and the photovoltaic inverter 30. The photovoltaic component 20 is configured to absorb solar energy from the sun and convert the solar energy into DC and output the DC. The photovoltaic inverter 30 is configured to convert the DC output by the photovoltaic component 20 into AC and output the AC to a load. Specifically, the output end of the photovoltaic component 20 is connected to the input end of the photovoltaic inverter 30, and an output end of the photovoltaic inverter 30 can be connected to a load 40. That is, the photovoltaic component 20 converts the solar energy from the sun into DC and outputs the DC to the photovoltaic inverter 30. The photovoltaic inverter 30 converts the DC into AC and outputs the AC to the load 40, thereby supplying electricity to the load 40. Here, the "load 40" can be understood as a device that needs to consume electric energy when operating. For example, the load 40 may be, but is not limited to, household appliances such as a refrigerator and an air conditioner. It should be noted that the energy storage device 10 may be connected to one photovoltaic component 20 or to multiple photovoltaic components 20 at the same time.

As illustrated in FIGS 1 and 2, the energy storage device 10 includes the control module 11, the bidirectional buck-boost module 12, and the energy storage module 13.

As a core controller of the energy storage device 10, the control module 11 can acquire output power of the photovoltaic component 20 and power demand of the load 40. The "power demand" can be understood as the power required for the load 40 to operate normally (for example, rated power of the load 40). A specific implementation method in which the control module 11 acquires the output power of the photovoltaic component 20 and acquires the power demand of the load 40 will be described in detail below. It should be noted that, depending on the specific form of the load 40 connected to the output end of the photovoltaic inverter 30, the magnitude of the power demand of the load 40 acquired by the control module 11 varies. The control module 11 includes a microcontroller unit (MCU).

The bidirectional buck-boost module 12 serves as a functional module in the energy storage device 10 that is configured to control charging and discharging processes of the energy storage module 13 (to be described below). A specific circuit structure of the bidirectional buck-boost module 12 will be described in detail below.

The bidirectional buck-boost module 12 is connected to the control module 11, and is configured to be connected to the output end of the photovoltaic component 20 and the input end of the photovoltaic inverter 30.

The energy storage module 13 serves as a power source in the energy storage device 10, can deliver energy to the photovoltaic inverter 30 to supply power to the load 40, and can store energy delivered from the photovoltaic component 20. The energy storage module 13 includes a battery, a battery management chip, and the like. The battery may be a storage battery or a lithium battery.

The energy storage module 13 is connected to the bidirectional buck-boost module 12, that is, the energy storage module 13 can be connected to the output end of the photovoltaic component 20 and the input end of the photovoltaic inverter 30 via the bidirectional buck-boost module 12.

Under the control of the control module 11, the bidirectional buck-boost module 12 is configured to boost or buck the output voltage of the photovoltaic component 20 and then charge the energy storage module 13. At this time, the output power of the photovoltaic component 20 may be greater than the power demand of the load 40. In this case, the control module 11 controls the bidirectional buck-boost module 12 to boost or buck the output voltage of the photovoltaic component 20 to store excess output power (that is, output power remaining after meeting the power demand of the load 40) in the energy storage module 13, so that the photovoltaic component 20 simultaneously supplies power to both the load 40 and the energy storage module 13 (that is, a first operating mode to be described below). Alternatively, the output end of the photovoltaic inverter 30 may not be connected to the load 40, or the output end of the photovoltaic inverter 30 may be connected to the load 40 but the load 40 has no electricity demand. In this case, the control module 11 controls the bidirectional buck-boost module 12 to boost or buck the output voltage of the photovoltaic component 20 to store all the output power output by the photovoltaic component 20 in the energy storage module 13, so that the photovoltaic component 20 supplies power only to the energy storage module 13 (that is, a second operating mode to be described below).

Under the control of the control module 11, the bidirectional buck-boost module 12 may also be configured to boost or buck the discharge voltage of the energy storage module 13 and then transmit the boosted or bucked discharge voltage to the photovoltaic inverter 30 during discharge of the energy storage module 13. In this case, the output power of the photovoltaic component 20 may be less than the power demand of the load 40, and the control module 11 controls the bidirectional buck-boost module 12 to boost or buck the discharge voltage of the energy storage module 13 during discharge to deliver the energy of the energy storage module 13 to the photovoltaic inverter 30, so that the energy storage module 13 only supplies power to the load 40 (that is, a third operating mode to be described below). Alternatively, the output power of the photovoltaic component 20 may be less than the power demand of the load 40. In this case, the control module 11 controls the bidirectional buck-boost module 12 to boost or buck the discharge voltage of the energy storage module 13 during discharge to deliver the energy of the energy storage module 13 to the photovoltaic inverter 30, and to deliver the output power of the photovoltaic component 20 to the photovoltaic inverter 30, so that the energy storage module 13 and the photovoltaic component 20 jointly supply power to the load 40 (that is, a fourth operating mode to be described below).

Of course, under the control of the control module 11, the bidirectional buck-boost module 12 allows the photovoltaic component 20 only to supply power to the load 40 (that is, a fifth operating mode to be described below). At this time, the bidirectional buck-boost module 12 is not involved in the process of boosting or bucking the output voltage of the photovoltaic component 20 or the process of boosting or bucking the discharge voltage of the energy storage module 13.

According to the energy storage device 10 in the example of the present disclosure, the control module 11, the bidirectional buck-boost module 12, and the energy storage module 13 are designed. On one hand, the control module 11 controls the bidirectional buck-boost module 12 to boost or buck the output voltage of the photovoltaic component 20 and then charge the energy storage module 13, so as to store part of energy output by the photovoltaic component 20 in the energy storage module 13 and increase the electricity quantity of the energy storage module 13 so that the energy storage device 10 can supply power to the load 40. On the other hand, the control module 11 controls the bidirectional buck-boost module 12 to boost or buck the discharge voltage of the energy storage module 13 and then transmit the boosted or bucked discharge voltage to the photovoltaic inverter 30 during discharge of the energy storage module 13, so as to deliver the energy, which is converted by the photovoltaic component 20 and stored in the energy storage module 13, to the load 40, so that the load 40 can operate normally.

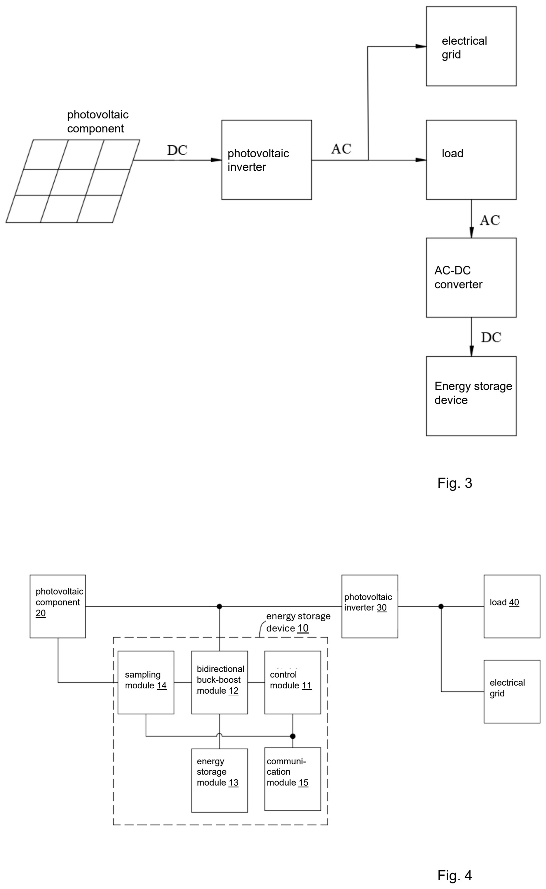

The energy storage device 10 is directly connected to the output end of the photovoltaic component 20, and excess DC output by the photovoltaic component 20 is directly supplied to the energy storage module 13 through the bidirectional buck-boost module 12, which can effectively reduce energy loss of the excess energy output by the photovoltaic component 20 in the AC-DC converter in FIG. 3, and has lower overall costs compared with a connection method illustrated in FIG. 3 (after a photovoltaic inverter converts DC output by a photovoltaic component into AC, excess AC needs to be converted into DC and stored in an energy storage device through an AC-DC converter).

Furthermore, as illustrated in FIG. 2, the energy storage device 10 further includes a sampling module 14 which is configured to be connected to the output end of the photovoltaic component 20 to sample the current or voltage of the photovoltaic component 20. The control module 11 is connected to the sampling module 14 and acquires the output power of the photovoltaic component 20 according to the current or voltage of the photovoltaic component 20 sampled by the sampling module 14. The control module 11 can also be configured to acquire the power demand of the load 40 connected to the photovoltaic inverter 30.

The control module 11 can compare the output power of the photovoltaic component 20 with the power demand of the load 40, and control the bidirectional buck-boost module 12 to be in different operating modes base on the comparison results, so as to meet charging and discharging needs of the energy storage module 13 in different application scenarios. The operating modes of the bidirectional buck-boost module 12 include the following cases.

Regarding the charging process of the energy storage module 13:
when the output power of the photovoltaic component 20 is greater than the power demand of the load 40, the control module 11 controls the bidirectional buck-boost module 12 to be in the first operating mode. In the first operating mode, the bidirectional buck-boost module 12 is configured to boost or buck the output voltage of the photovoltaic component 20 and then charge the energy storage module 13, so that the photovoltaic component 20 supplies power to both the load 40 and the energy storage module 13. It should be noted that in the first operating mode, one part of the output power of the photovoltaic component 20 is provided to the load 40 to meet the power demand of the load 40, and the other part of the output power of the photovoltaic component 20 is provided for the energy storage module 13 to charge the energy storage module 13. In addition, the output power of the photovoltaic component 20 is allocated to meet the power demand of the load 40 first, and after meeting the power demand of the load 40, the remaining output power of the photovoltaic component 20 is used to charge the energy storage module 13, thereby ensuring the normal operation of the load 40.

In this design, the control module 11 controls the bidirectional buck-boost module 12 to be in the first operating mode, so that the photovoltaic component 20 can simultaneously supply power to the load 40 and the energy storage module 13. Accordingly, not only the power demand of the load 40 can be met, but also the remaining output power of the photovoltaic component 20 can be used to charge the energy storage module 13. By designing the bidirectional buck-boost module 12, the power control of the photovoltaic inverter 30 can be achieved to maximize the correspondence between the output power of the photovoltaic inverter 30 and the power demand of the load 40, achieving self-generation and self-consumption, and there is no efficiency loss in the part that supplies power to the photovoltaic inverter 30.

When the power demand of the load 40 acquired by the control module 11 is zero, the control module 11 controls the bidirectional buck-boost module 12 to be in the second operating mode. In the second operating mode, the bidirectional buck-boost module 12 is configured to boost or buck the output voltage of the photovoltaic component 20 and then charge the energy storage module 13, so that the photovoltaic component 20 only supplies power to the energy storage module 13. It should be noted that "the power demand of the load 40 acquired by the control module 11 being zero" could mean that the output end of the photovoltaic inverter 30 is not connected to the load 40, or the output end of the photovoltaic inverter 30 is connected to the load 40 but the load 40 has no electricity demand at this time. In addition, when the bidirectional buck-boost module 12 is in the second operating mode, the output power of the photovoltaic component 20 can be any value. For example, when the output power of the photovoltaic component 20 is large, in the second operating mode, the photovoltaic component 20 can charge the energy storage module 13 with the large charging power; when the output power of the photovoltaic component 20 is small, in the second operating mode, the photovoltaic component 20 can charge the energy storage module 13 with the small charging power.

In this design, when the photovoltaic inverter 30 is not connected to the load 40, or when the load 40 connected to the photovoltaic inverter 30 has no electricity demand, the control module 11 controls the bidirectional buck-boost module 12 to be in the second operating mode. Accordingly, the photovoltaic component 20 only supplies power to the energy storage module 13, thereby increasing the electric quantity of the energy storage module 13, so that the energy storage module 13 can supply power to the load 40 in other operating modes.

Regarding the discharging process of the energy storage module 13:
when the output power of the photovoltaic component 20 is less than the power demand of the load 40, if the output power of the photovoltaic component 20 acquired by the control module 11 is equal to or less than a preset first power threshold, the control module 11 controls the bidirectional buck-boost module 12 to be in the third operating mode. In the third operating mode, the bidirectional buck-boost module 12 is configured to boost or buck the discharge voltage of the energy storage module 13 and transmit the boosted or bucked discharge voltage to the photovoltaic inverter 30 during discharge of the energy storage module 13, so that the energy storage module 13 can supply power to the load 40 and the photovoltaic component 20 stops supplying power to the load 40. It should be noted that the "first power threshold" is a power value corresponding to a power loss caused by internal resistance of conductors. For example, when the output power of the photovoltaic component 20 acquired by the control module 11 is exactly equal to the first power threshold, power generation of the photovoltaic component 20 is very low and the output power of the photovoltaic component 20 is all consumed by the internal resistance of the conductors. Therefore, the photovoltaic component 20 does not supply power to the load 40 at this time. As another example, when the output power of the photovoltaic component 20 acquired by the control module 11 is exactly zero, the power generation of the photovoltaic component 20 is zero. Therefore, the photovoltaic component 20 does not supply power to the load 40 at this time. A specific value of the "first power threshold" is not limited here, and design engineers can set the value in advance according to actual needs.

In this design, when the power generation of the photovoltaic component 20 is zero or very low, the control module 11 controls the bidirectional buck-boost module 12 to be in the third operating mode, enabling the energy storage module 13 to only supply power to the load 40 to meet the electricity demand of the load 40. By designing the bidirectional buck-boost module 12, the power control of the photovoltaic inverter 30 can be achieved to maximize the correspondence between the output power of the photovoltaic inverter 30 and the power demand of the load 40, achieving self-generation and self-consumption, and there is no efficiency loss in the part that supplies power to the photovoltaic inverter 30.

When the output power of the photovoltaic component 20 is less than the power demand of the load 40, if the output power of the photovoltaic component 20 acquired by the control module 11 is greater than the first power threshold and equal to or less than a preset second power threshold, the control module 11 controls the bidirectional buck-boost module 12 to be in the fourth operating mode. In the fourth operating mode, the bidirectional buck-boost module 12 is configured to boost or buck the discharge voltage of the energy storage module 13 and transmit the boosted or bucked discharge voltage to the photovoltaic inverter 30 during discharge of the energy storage module 13, so that the photovoltaic component 20 and the energy storage module 13 jointly supply power to the load 40. It should be noted that the "second power threshold" is a power value at which it is insufficient for the photovoltaic component 20 to only supply power to the load 40 to ensure operation of the load 40. For example, when the output power of the photovoltaic component 20 acquired by the control module 11 is exactly equal to the second power threshold, the power generation of the photovoltaic component 20 is low and insufficient to enable the load 40 to operate. Therefore, the photovoltaic component 20 needs to cooperate with the energy storage module 13 to supply power to the load 40 to meet the electricity demand of the load 40. A specific value of the "second power threshold" is not limited here, and design engineers can set the value in advance according to actual needs.

In this design, when the power generation of the photovoltaic component 20 is so low that it is insufficient to enable the load 40 to operate, the control module 11 controls the bidirectional buck-boost module 12 to be in the fourth operating mode, so that the energy storage module 13 can cooperate with the photovoltaic component 20 to supply power to the load 40 to meet the electricity demand of the load 40.

Regarding a process in which the energy storage module 13 performs neither charging nor discharging:
when the output power of the photovoltaic component 20 is less than the power demand of the load 40, if the output power of the photovoltaic component 20 acquired by the control module 11 is greater than the second power threshold, the control module 11 controls the bidirectional buck-boost module 12 to be in the fifth operating mode. In the fifth operating mode, the bidirectional buck-boost module 12 does not operate, so that the photovoltaic component 20 directly supplies power to the load 40.

In this design, when the power generation of the photovoltaic component 20 is low but enables the load 40 to operate, the control module 11 controls the bidirectional buck-boost module 12 to be in the fifth operating mode, so that the photovoltaic component 20 only supplies power to the load 40 to meet the electricity demand of the load 40. In the fifth operating mode, the photovoltaic component 20 directly supplies power to the load 40 without going through any other conversion modules, with almost no power loss.

As illustrated in FIG. 4, the control module 11 can acquire the power demand of the load 40 to compare the power demand of the load 40 with the output power of the photovoltaic component 20, and control the bidirectional buck-boost module 12 to be in one of the first operating mode, the second operating mode, the third operating mode, the fourth operating mode and the fifth operating mode based on different comparison results. In order that the control module 11 can acquire the power demand of the load 40, it is designed that, in some examples, the energy storage device 10 further includes a communication module 15. The communication module 15 is connected to the control module 11 and is configured to acquire the power demand of the load 40 after establishing a communication connection with the load 40. The communication module 15 may be a communication interface that is electrically connected to the control module 11 and integrated into the energy storage device 10. In this case, a user can connect an electricity meter/smart socket to the communication interface, enabling the control module 11 to acquire the power demand of the load 40 through the electricity meter/smart socket. Alternatively, the communication module 15 may be a WIFI module or Bluetooth module that is electrically connected to the control module 11. In this case, the control module 11 can acquire the power demand of the load 40 through, for example, cloud communication.

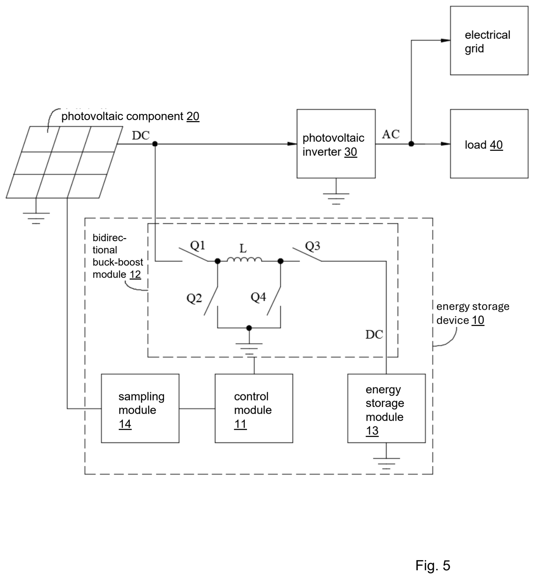

As illustrated in FIG. 5, in different operating modes, the bidirectional buck-boost module 12 can boost or buck the output voltage of the photovoltaic component 20 and then charge the energy storage module 13, or boost or buck the discharge voltage of the energy storage module 13 and transmit the boosted or bucked discharge voltage to the photovoltaic inverter 30 during discharge of the energy storage module 13. In order that the bidirectional buck-boost module 12 has the corresponding functions, the bidirectional buck-boost module 12 includes a DC-DC bidirectional buck-boost circuit. Specifically, the bidirectional buck-boost circuit includes a first switching element Q1, a second switching element Q2, a third switching element Q3, a fourth switching element Q4, and an inductor L. A first connection end of the first switching element Q1 is configured to be connected to the output end of the photovoltaic component 20. A first connection end of the second switching element Q2 is connected to a second connection end of the first switching element Q1, and a second connection end of the second switching element Q2 is grounded. A first end of the inductor L is connected to the second connection end of the first switching element Q1. A first connection end of the third switching element Q3 is connected to a second end of the inductor L, and a second connection end of the third switching element Q3 is connected to the energy storage module 13. A first connection end of the fourth switching element Q4 is connected to the second end of the inductor L, and a second connection end of the fourth switching element Q4 is grounded. The control module 11 is connected to the first switching element Q1, the second switching element Q2, the third switching element Q3, and the fourth switching element Q4 to control on-off states of the first switching element Q1, the second switching element Q2, the third switching element Q3, and the fourth switching element Q4.

It should be noted that at least one of the first switching element Q1, the second switching element Q2, the third switching element Q3, and the fourth switching element Q4 can be in a specific form of at least one of an electrically controlled single-pole single-throw switch, a triode, and a field-effect transistor. The "on-off states" includes an "on state" and an "off state". The first switching element Q1, the second switching element Q2, the third switching element Q3, and the fourth switching element Q4 all have on-off states. Taking the first switching element Q1 as an example, when the first switching element Q1 is specifically an electrically controlled single-pole single-throw switch, the "on state" of the electrically controlled single-pole single-throw switch is a state when its moving end is closed; conversely, the "off state" of the electrically controlled single-pole single-throw switch is a state when its moving end is open; when the first switching element Q1 is specifically a triode, the "on state" of the triode is a state in which a collector and an emitter of the triode are connected; conversely, the "off state" of the triode is a state in which the collector and the emitter of the transistor are disconnected.

As illustrated in FIG. 5, the on-off states of the first switching element Q1, the second switching element Q2, the third switching element Q3, and the fourth switching element Q4 in the five operating modes of the bidirectional buck-boost module 12 will be described below.

When the bidirectional buck-boost module 12 is in the first operating mode, if the output voltage of the photovoltaic component 20 is higher than a charging voltage of the energy storage module 13, the third switching element Q3 is turned on and the fourth switching element Q4 is turned off, and the first switching element Q1, the second switching element Q2 and the inductor L form a buck circuit; if the output voltage of the photovoltaic component 20 is lower than the charging voltage of the energy storage module 13, the first switching element Q1 is turned on and the second switching element Q2 is turned off, and the third switching element Q3, the fourth switching element Q4 and the inductor L form a boost circuit.

When the bidirectional buck-boost module 12 is in the second operating mode, if the output voltage of the photovoltaic component 20 is higher than the charging voltage of the energy storage module 13, the third switching element Q3 is turned on and the fourth switching element Q4 is turned off, and the first switching element Q1, the second switching element Q2 and the inductor L form a buck circuit; if the output voltage of the photovoltaic component 20 is lower than the charging voltage of the energy storage module 13, the first switching element Q1 is turned on and the second switching element Q2 is turned off, and the third switching element Q3, the fourth switching element Q4 and the inductor L form a boost circuit.

When the bidirectional buck-boost module 12 is in the third operating mode, if the input voltage of the photovoltaic inverter 30 is higher than the discharge voltage of the energy storage module 13, the third switching element Q3 is turned on and the fourth switching element Q4 is turned off, and the first switching element Q1, the second switching element Q2 and the inductor L form a boost circuit; if the input voltage of the photovoltaic inverter 30 is lower than the discharge voltage of the energy storage module 13, the first switching element Q1 is turned on and the second switching element Q2 is turned off, and the third switching element Q3, the fourth switching element Q4 and the inductor L form a buck circuit.

When the bidirectional buck-boost module 12 is in the fourth operating mode, if the output voltage of the photovoltaic component 20 is higher than the discharge voltage of the energy storage module 13, the third switching element Q3 is turned on and the fourth switching element Q4 is turned off, and the first switching element Q1, the second switching element Q2 and the inductor L form a boost circuit; if the output voltage of the photovoltaic component 20 is lower than the discharge voltage of the energy storage module 13, the first switching element Q1 is turned on and the second switching element Q2 is turned off, and the third switching element Q3, the fourth switching element Q4 and the inductor L form a buck circuit.

When the bidirectional buck-boost module 12 is in the fifth operating mode, the first switching element Q1, the second switching element Q2, the third switching element Q3 and the fourth switching element Q4 are all turned off.

A second aspect of the present disclosure proposes a photovoltaic energy storage inverter system that includes the photovoltaic component 20, the photovoltaic inverter 30, and the above-described energy storage device 10. The photovoltaic component 20 and the energy storage device 10 are detachably connected, and the photovoltaic inverter 30 and the energy storage device 10 are detachably connected. In this design, in the photovoltaic energy storage inverter system including the above-described energy storage device 10, the user can move and assemble the photovoltaic component 20, the energy storage device 10, and the photovoltaic inverter 30 according to the actual application environment, so as to meet the user's electricity demands in different application scenarios.

It should be noted that in the photovoltaic energy storage inverter system, the photovoltaic component 20, the energy storage device 10, and the photovoltaic inverter 30 are components independent of each other. The user can assemble the photovoltaic component 20, the energy storage device 10 and the photovoltaic inverter 30 according to the actual application environment. For example, in a cloudy application environment, the user can only assemble the photovoltaic inverter 30 to the energy storage device 10 to meet the demand for supplying power to the load 40 by the energy storage device 10. For example, in a sunny application environment, the user can only assemble the photovoltaic component 20 to the energy storage device 10 to meet the demand for supplying power to the energy storage device 10 by the photovoltaic component 20. Of course, the user can also assemble the photovoltaic component 20, the energy storage device 10 and the photovoltaic inverter 30 according to actual needs to meet the demand for supplying power to the load 40 by the photovoltaic component 20 and/or the energy storage device 10.

The energy storage device 10 may also be a portable outdoor mobile energy storage device. Accordingly, after the photovoltaic component 20 charges the energy storage device 10, the user can take the energy storage device 10 outdoors for use, which not only makes efficient use of the excess electric energy converted by the photovoltaic component 20, but also makes it convenient for the user to obtain enough electric energy outdoors to supply power to the load 40.

The same or similar reference signs in the drawings of the examples correspond to the same or similar parts. In the description of the present disclosure, it should be understood that the terms "upper", "lower", "left", "right", and the like indicating orientation or position relationships are based on orientation or position relationships shown in the drawings, and are intended to describe the disclosure and simplify descriptions only and not to indicate or imply that the referred device or element must be configured and operated in a particular orientation. Therefore, the terms used to describe position relationships are intended to be illustrative only and are not intended to limit the present disclosure. For those skilled in the art, specific meanings of the above terms can be understood according to specific situations.

The above are only preferred examples of the present disclosure and are not intended to limit the disclosure. Any modifications, equivalent substitutions, improvements or the like within the spirit and principle of the disclosure should be included in the scope of the disclosure.

## Claims

1. An energy storage device used in a photovoltaic energy storage inverter system which further comprises a photovoltaic component and a photovoltaic inverter connected to each other, the energy storage device comprising:
- a control module;
- a bidirectional buck-boost module connected to the control module and configured to be connected to an output end of the photovoltaic component and an input end of the photovoltaic inverter; and
- an energy storage module connected to the bidirectional buck-boost module and configured to store and deliver electric energy,
- wherein under control of the control module, the bidirectional buck-boost module is configured to boost or buck an output voltage of the photovoltaic component and then charge the energy storage module, or configured to boost or buck a discharge voltage of the energy storage module and then transmit the boosted or bucked discharge voltage to the photovoltaic inverter during discharge of the energy storage module.

2. . The energy storage device of claim 1, further comprising:
- a sampling module configured to be connected to the output end of the photovoltaic component to sample a current or voltage of the photovoltaic component, wherein the control module is connected to the sampling module and acquires output power of the photovoltaic component according to the current or voltage of the photovoltaic component sampled by the sampling module, and is configured to acquire power demand of the load connected to the photovoltaic inverter;
- wherein when the output power of the photovoltaic component is greater than the power demand of the load, the control module controls the bidirectional buck-boost module to be in a first operating mode in which the bidirectional buck-boost module is configured to boost or buck the output voltage of the photovoltaic component and then charge the energy storage module, so that the photovoltaic component supplies power to both the load and the energy storage module.

3. . The energy storage device of claim 1, further comprising:
- a sampling module configured to be connected to the output end of the photovoltaic component to sample a current or voltage of the photovoltaic component, wherein the control module is connected to the sampling module and acquires output power of the photovoltaic component according to the current or voltage of the photovoltaic component sampled by the sampling module, and is configured to acquire power demand of the load connected to the photovoltaic inverter;
- wherein when the power demand of the load acquired by the control module is zero, the control module controls the bidirectional buck-boost module to be in a second operating mode in which the bidirectional buck-boost module is configured to boost or buck the output voltage of the photovoltaic component and then charge the energy storage module, so that the photovoltaic component only supplies power to the energy storage module.

4. . The energy storage device of claim 1, further comprising:
- a sampling module configured to be connected to the output end of the photovoltaic component to sample a current or voltage of the photovoltaic component, wherein the control module is connected to the sampling module and acquires output power of the photovoltaic component according to the current or voltage of the photovoltaic component sampled by the sampling module, and is configured to acquire power demand of the load connected to the photovoltaic inverter;
- wherein when the output power of the photovoltaic component is less than the power demand of the load, if the output power of the photovoltaic component acquired by the control module is equal to or less than a preset first power threshold, the control module controls the bidirectional buck-boost module to be in a third operating mode in which the bidirectional buck-boost module is configured to boost or buck the discharge voltage of the energy storage module and transmit the boosted or bucked discharge voltage to the photovoltaic inverter during discharge of the energy storage module, so that the energy storage module supplies power to the load and the photovoltaic component stops supplying power to the load.

5. . The energy storage device of claim 1, further comprising:
- a sampling module configured to be connected to the output end of the photovoltaic component to sample a current or voltage of the photovoltaic component, wherein the control module is connected to the sampling module and acquires output power of the photovoltaic component according to the current or voltage of the photovoltaic component sampled by the sampling module, and is configured to acquire power demand of the load connected to the photovoltaic inverter;
- wherein when the output power of the photovoltaic component is less than the power demand of the load, if the output power of the photovoltaic component acquired by the control module is greater than a preset first power threshold and equal to or less than a preset second power threshold, the control module controls the bidirectional buck-boost module to be in a fourth operating mode in which the bidirectional buck-boost module is configured to boost or buck the discharge voltage of the energy storage module and transmit the boosted or bucked discharge voltage to the photovoltaic inverter during discharge of the energy storage module, so that the photovoltaic component and the energy storage module jointly supply power to the load.

6. . The energy storage device of claim 1, further comprising:
- a sampling module configured to be connected to the output end of the photovoltaic component to sample a current or voltage of the photovoltaic component, wherein the control module is connected to the sampling module and acquires output power of the photovoltaic component according to the current or voltage of the photovoltaic component sampled by the sampling module, and is configured to acquire power demand of the load connected to the photovoltaic inverter;
- wherein when the output power of the photovoltaic component is less than the power demand of the load, if the output power of the photovoltaic component acquired by the control module is greater than a preset second power threshold, the control module controls the bidirectional buck-boost module to be in a fifth operating mode in which the bidirectional buck-boost module does not operate, so that the photovoltaic component directly supplies power to the load.

7. . The energy storage device of any one of claims 2 to 6, further comprising:
- a communication module connected to the control module and configured to acquire the power demand of the load after establishing a communication connection with the load.

8. . The energy storage device of any one of claims 1 to 6, wherein
- the bidirectional buck-boost module comprises a DC-DC bidirectional buck-boost circuit comprising:
- a first switching element, of which a first connection end is configured to be connected to the output end of the photovoltaic component;
- a second switching element, of which a first connection end is connected to a second connection end of the first switching element, and a second connection end is grounded;
- an inductor, of which a first end is connected to the second connection end of the first switching element;
- a third switching element, of which a first connection end is connected to a second end of the inductor, and a second connection end is connected to the energy storage module; and
- a fourth switching element, of which a first connection end is connected to the second end of the inductor, and a second connection end is grounded,
- wherein the control module is connected to the first switching element, the second switching element, the third switching element, and the fourth switching element to control on-off states of the first switching element, the second switching element, the third switching element, and the fourth switching element.

9. . The energy storage device of claim 8, wherein the bidirectional buck-boost module has a first operating mode, a second operating mode, a third operating mode, a fourth operating mode, and a fifth operating mode, wherein
- in the first operating mode, if the output voltage of the photovoltaic component is higher than a charging voltage of the energy storage module, the control module controls the third switching element to be turned on and the fourth switching element to be turned off, and the first switching element, the second switching element and the inductor form a buck circuit; if the output voltage of the photovoltaic component is lower than a charging voltage of the energy storage module, the control module controls the first switching element to be turned on and the second switching element to be turned off, and the third switching element, the fourth switching element and the inductor form a boost circuit; and/or
- in the second operating mode, if the output voltage of the photovoltaic component is higher than a charging voltage of the energy storage module, the control module controls the third switching element to be turned on and the fourth switching element to be turned off, and the first switching element, the second switching element and the inductor form a buck circuit; if the output voltage of the photovoltaic component is lower than a charging voltage of the energy storage module, the control module controls the first switching element to be turned on and the second switching element to be turned off, and the third switching element, the fourth switching element and the inductor form a boost circuit; and/or
- in the third operating mode, if an input voltage of the photovoltaic inverter is higher than the discharge voltage of the energy storage module, the control module controls the third switching element to be turned on and the fourth switching element to be turned off, and the first switching element, the second switching element and the inductor form a boost circuit; if an input voltage of the photovoltaic inverter is lower than the discharge voltage of the energy storage module, the control module controls the first switching element to be turned on and the second switching element to be turned off, and the third switching element, the fourth switching element and the inductor form a buck circuit; and/or
- in the fourth operating mode, if the output voltage of the photovoltaic component is higher than the discharge voltage of the energy storage module, the control module controls the third switching element to be turned on and the fourth switching element to be turned off, and the first switching element, the second switching element and the inductor L form a boost circuit; if the output voltage of the photovoltaic component is lower than the discharge voltage of the energy storage module, the control module controls the first switching element to be turned on and the second switching element to be turned off, and the third switching element, the fourth switching element and the inductor form a buck circuit; and/or
- in the fifth operating mode, the control module controls the first switching element, the second switching element, the third switching element and the fourth switching element all to be turned off.

10. . A photovoltaic energy storage inverter system comprising:
- the energy storage device of claim 1;
- a photovoltaic component detachably connected to the energy storage device; and
- a photovoltaic inverter detachably connected to the energy storage device.
